(19) Europäisches Patentamt
European Patent Office
Office européen des brevets

(11) **EP 1 758 075 A1**

(12) **EUROPEAN PATENT APPLICATION**
published in accordance with Art. 158(3) EPC

(43) Date of publication:
**28.02.2007 Bulletin 2007/09**

(51) Int Cl.:
***G09G 3/22*** *(2006.01)*   ***G09G 3/20*** *(2006.01)*
***H04N 5/66*** *(2006.01)*

(21) Application number: **05751430.9**

(22) Date of filing: **16.06.2005**

(86) International application number:
**PCT/JP2005/011070**

(87) International publication number:
**WO 2005/124734 (29.12.2005 Gazette 2005/52)**

(84) Designated Contracting States:
**DE FR GB**

(30) Priority: **18.06.2004 JP 2004181014**

(71) Applicant: **KABUSHIKI KAISHA TOSHIBA**
**Tokyo 105-8001 (JP)**

(72) Inventor: **ARAI, Takayuki**
**c/o Intell.Prop.Div., Toshiba Corp.**
**Tokyo 105-8001 (JP)**

(74) Representative: **HOFFMANN EITLE**
**Patent- und Rechtsanwälte**
**Arabellastrasse 4**
**81925 München (DE)**

(54) **VIDEO DISPLAY DEVICE AND VIDEO DISPLAY DEVICE LUMINANCE CHARACTERISTIC CORRECTION METHOD**

(57)     A multiplier to which input video data is input, an adder to which an output of the multiplier is input, a memory in which correction data items supplied to the multiplier and adder are stored, and a control portion are provided. Correction data items for a plurality of luminance correction points of one display dot are prepared in the memory and the correction data contains correction data items for multiplication and addition with respect to video data. Correction data for multiplication is multiplied with respect to the video data corresponding to each display dot in the multiplier (ST1, ST2), correction data for addition/subtraction is further added or subtracted with respect to video data obtained as the result of multiplication in the adder (ST3), and video data obtained by the adding process is output to a corresponding display dot (ST4).

FIG. 13

**Description**

Technical Field

This invention relates to a flat video display device using field emission type surface-conduction electron-emitter type elements, plasma light-emitting elements or the like, and to a video display device capable of correcting luminance irregularity for each display dot and a luminance characteristic correcting method of the display device.

Background Art

In a video display device, there is a problem that luminance irregularity, color irregularity and the like occur due to a variation in the luminance characteristic between light emitting elements. In order to solve this problem, a method in a patent document 1 explained below is proposed.
In patent document 1, a video image displayed on the display device is captured, a video signal thus obtained is subjected to analog-to-digital conversion to obtain correction data, the correction data is processed and programmed into a nonvolatile memory, and a video signal displayed on the display device is corrected by use of the programmed correction data (for example, refer to Jpn. Pat. Appln. KOKAI Publication No. 2001-75542).

Disclosure of Invention

A variation in the luminance characteristic between the light emitting elements is corrected as described in the above Jpn. Pat. Appln. KOKAI Publication No. 2001-75542, but the inventors of this application and others further pay much attention to points to be improved.
That is, when attention is paid to the light emitting element itself, the relationship between a variation in the luminance of the light emitting element and a variation in voltage (the level of video data) applied to the light emitting element is not always linear. Therefore, when video data supplied to the light emitting element is corrected, a method for simply linearly changing the input-output characteristic cannot be used as the correction method.
Further, as the method for variably changing the luminance of the light emitting element, a method for variably changing it according to a variation in the pulse width supplied to the light emitting element, a method for variably changing it according to a voltage value and the like are provided, but finer gradation representation can be expected by combining the above methods.
Accordingly, this invention is made in view of the above conditions and an object thereof is to provide a video display device of high quality capable of finely and precisely making adequate luminance characteristic correction by paying attention to the fact that the relationship between a variation in the luminance of a light emitting element and a variation in voltage (the level of video data) applied to the light emitting element is not always linear, providing a plurality of correction data items for respective display dots and using the plurality of correction data items.
One embodiment of this invention comprises an operating path including an adder or subtracter to which input video data is input, a memory which is a memory having correction data used in the operating path stored therein and in which a plurality of luminance correction points are set on a luminance characteristic of at least one display dot and correction data items of the plurality of luminance correction points are stored, and a control portion which controls the operating path and the memory, wherein correction data stored in the memory is supplied to the operating path for correction of the input video data under control of the control portion when the input video data of the plurality of luminance correction points for the display dot is input, and interpolation correction data is formed by use of the correction data and the interpolation correction data is supplied to the operating path for correction of input video data when the input video data between the plurality of luminance correction points is input. Further, it is concretely explained in the embodiment of this invention.
According to the above means, fine and precise luminance correction can be attained for each display dot. Then, since adequate correction data for input video data can be used, the luminance characteristic of the display dots can be corrected to a desired characteristic. As a result, luminance irregularity between a plurality of display dots can be preferably reduced. Thus, the display video image quality can be enhanced.

Brief Description of Drawings

FIG. 1 is a diagram schematically showing the whole portion of a display device to which this invention is applied.
FIG. 2A is an explanatory diagram showing an example of the minimum pulse width applied to a display dot via a signal line in order to make it possible to understand the function of the device according to this invention.

FIG. 2B is an explanatory diagram showing an example of the maximum pulse width applied to a display dot via a signal line in order to make it possible to understand the function of the device according to this invention.

FIG. 2C is an explanatory diagram showing an example of a pulse supplied to a display dot via a scanning line in order to make it possible to understand the function of the device according to this invention.

FIG. 2D is an explanatory diagram showing a variation characteristic of luminance and voltage applied to a display dot in order to make it possible to understand the function of the device according to this invention.

FIG. 2E is an explanatory diagram showing a variation characteristic of luminance and pulse width modulation voltage applied to a display dot in order to make it possible to understand the function of the device according to this invention.

FIG. 3A is an explanatory diagram for illustrating an example of display dot drive voltage obtained when the pulse width is variably changed with voltage setting Vx0 set as a reference in the device of this invention.

FIG. 3B is an explanatory diagram for illustrating an example of display dot drive voltage obtained when the pulse width is variably changed with voltage setting Vx1 set as a reference in the device of this invention.

FIG. 3C is an explanatory diagram for illustrating an example of display dot drive voltage obtained when the pulse width is variably changed with voltage setting Vx2 set as a reference in the device of this invention.

FIG. 3D is an explanatory diagram for illustrating an example of display dot drive voltage obtained when the pulse width is variably changed with voltage setting Vx3 set as a reference in the device of this invention.

FIG. 4 is an explanatory diagram shown to illustrate a luminance characteristic for drive voltage of a display dot B which is an object of image data correction in a luminance characteristic correction circuit incorporated in this invention.

FIG. 5 is an explanatory diagram shown to illustrate the distribution of display dots with respect to a luminance variation.

FIG. 6 is an explanatory diagram shown to illustrate characteristics obtained in the luminance characteristic correction circuit in order to correct a characteristic line CHB of FIG. 4.

FIG. 7 is an explanatory diagram shown to illustrate a luminance characteristic for drive voltage of a display dot AA which is an object of image data correction in the luminance characteristic correction circuit incorporated in this invention.

FIG. 8 is an explanatory diagram shown to illustrate characteristics obtained in the luminance characteristic correction circuit in order to correct a characteristic line CHAA of FIG. 7.

FIG. 9 is a diagram shown to illustrate an example of the configuration which is the main portion of this invention.

FIG. 10 is a diagram shown to illustrate another example of the configuration which is the main portion of this invention.

FIG. 11 is a diagram shown to illustrate the operation of the circuit of FIG. 10.

FIG. 12 is a diagram showing an example of the configuration which is the main portion of a color display device to which this invention is applied.

FIG. 13 is a flowchart shown to illustrate the operation of the device shown in FIG. 12.

FIG. 14 is an explanatory diagram showing another example of a correction data forming method according to this invention.

FIG. 15 is an explanatory diagram showing another example of a correction data forming method according to this invention.

FIG. 16 is a configuration explanatory diagram showing another embodiment of this invention.

FIG. 17 is a configuration explanatory diagram shown to illustrate the basic configuration of this invention.

FIG. 18 is an explanatory diagram shown to illustrate a luminance characteristic for drive voltage of a display dot DD which is a to-be-corrected object of correction image data and is a diagram shown to illustrate the operation of the device of FIG. 17.

Best Mode for Carrying Out the Invention.

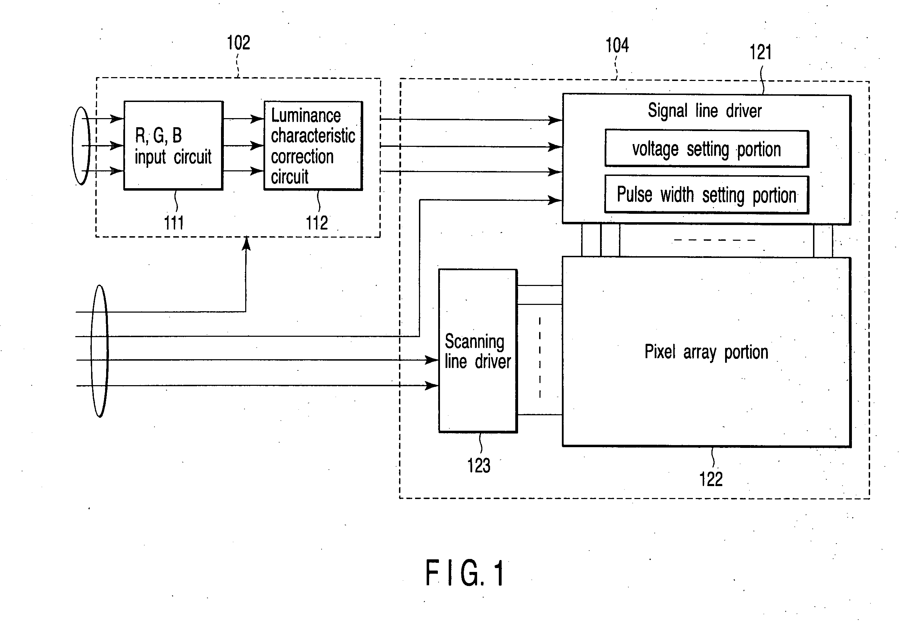

There will now be described one embodiment of this invention with reference to the drawings. In FIG. 1, 102 denotes a signal line driver drive circuit which is supplied with video data of R, G, B subjected to an image quality enhancing process such as contrast adjustment, brightness adjustment and contour emphasis by a video signal processing circuit (not shown in the drawing), for example. The video data is input to a luminance characteristic correction circuit 112 via an R, G, B input circuit 111. The luminance characteristic correction circuit 112 corrects and processes video data by use of correction data stored in a memory (not shown in the drawing) or the like and the concrete method and circuit configuration thereof will be described later. Further, the process performed in the luminance characteristic correction circuit 112 may be processed by software.

Respective video data items of R, G, B output from the luminance characteristic correction circuit 112 are input to a signal line driver 121 of a flat panel display portion 104. Video data corresponding to each display dot of one scanning line is input to the signal line driver 121 in one horizontal scanning period. The signal line driver 121 holds video data items of R, G, B of one scanning line input from the luminance characteristic correction circuit 112 and simultaneously supplies signals corresponding to the video data to respective display dots of one scanning line. At this time, the pulse widths and voltage values of the signals supplied to the respective display dots are set according to input video data. In this specification, a display portion by one element is referred to as a display dot. Further, a color display portion by three elements of R (Red), G (Green), B (Blue) is referred to as a pixel.

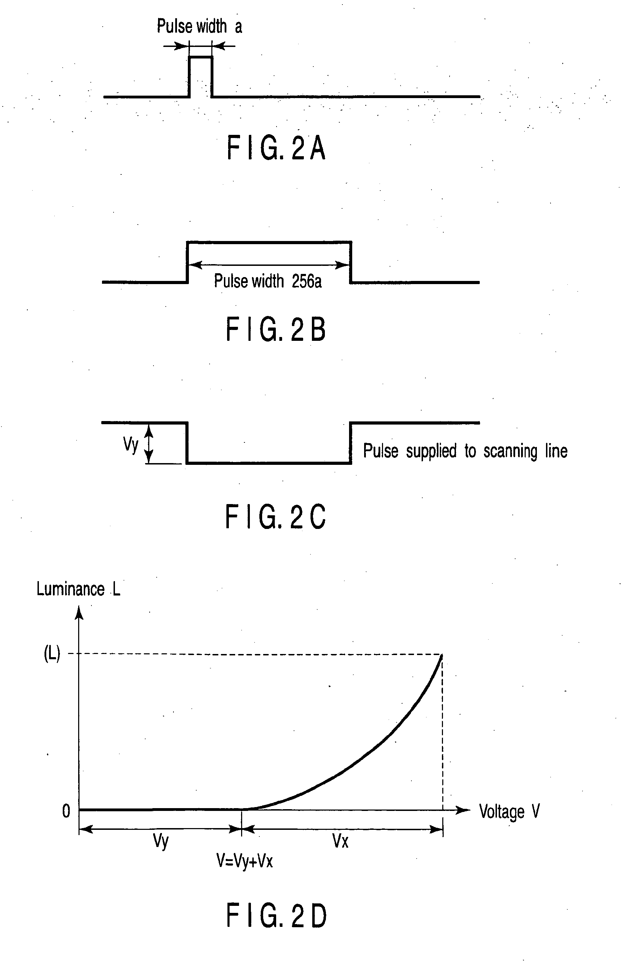

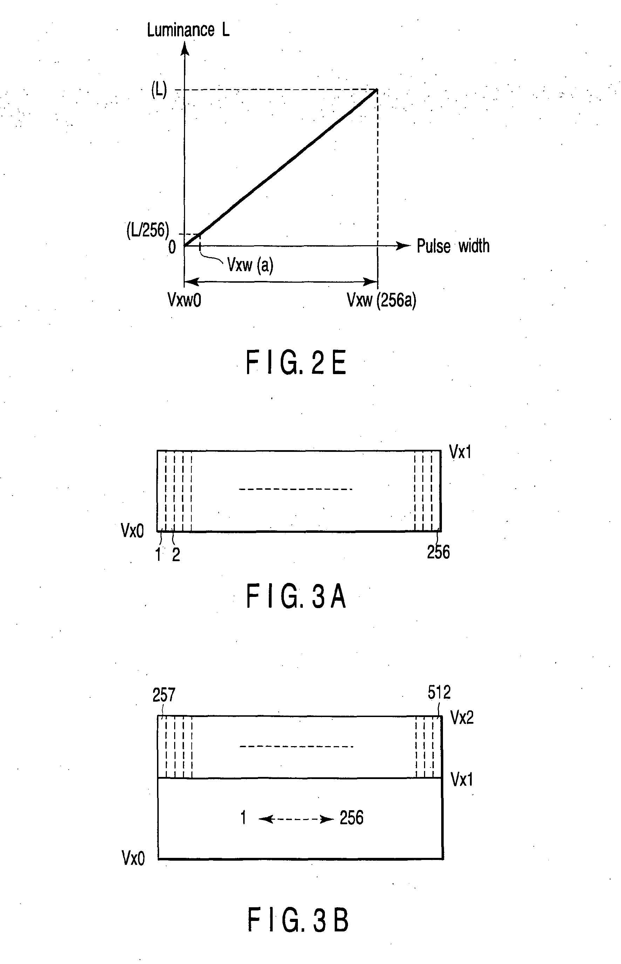

FIG. 2A to FIG. 2D show examples of the pulse widths of voltage applied to a display dot from a scanning line driver 123 and voltage supplied from the signal line driver 121 and a state of a variation in drive voltage applied to the display dot. FIG. 2D shows the relationship between the drive voltage and luminance. FIG. 2E shows the relationship between the pulse width by pulse width modulation and luminance.

Assume now that an output of one signal line of the signal line driver 121 is expressed by ten bits on the input side. Then, assume that the voltage amplitude is expressed by two bits among the ten bits and the pulse width is expressed by eight bits. At this time, assume that the pulse width is expressed by 1a to 256a (the minimum pulse width is "a").

Further, FIG. 2A to FIG. 2E are shown to illustrate the basic idea associated with voltage applied to the display dot and the luminance of the display dot.

First, the characteristic between the luminance and application voltage to a display dot at the time of amplitude modulation is explained by use of FIG. 2D.

Assume now that voltage Vy shown in FIG. 2C is applied to a scanning line to which a display dot is connected. Next, if voltage Vx applied to a signal line of the display dot for one horizontal scanning period (the pulse width 256a shown in FIG. 2B) is changed, a characteristic shown in FIG. 2D is attained.

Next, the characteristic between the luminance and the pulse width with respect to a display dot at the time of pulse width modulation is explained by use of FIG. 2E.

Assume now that voltage Vy shown in FIG. 2C is applied to a scanning line to which a display dot is connected. Next, assume that the pulse width applied to a signal line of the display dot is variably changed. Assume that the pulse width is variably changed between 1a and 256a (shown in FIG. 2B) which is the maximum in the unit of pulse width a (shown in FIG. 2A). Assume that the voltage value of the pulse at this time is a value which lies in a region of Vx of FIG. 2D.

Assume that the luminance L of the display dot with respect to the pulse widths Vxw(a) to Vxw(256a) indicates a characteristic shown in FIG. 2E. Since the luminance approximately varies in proportion to a variation in the pulse width, the luminance at the time of minimum pulse width a is L/256 if the luminance at the time of maximum pulse width 256a is L.

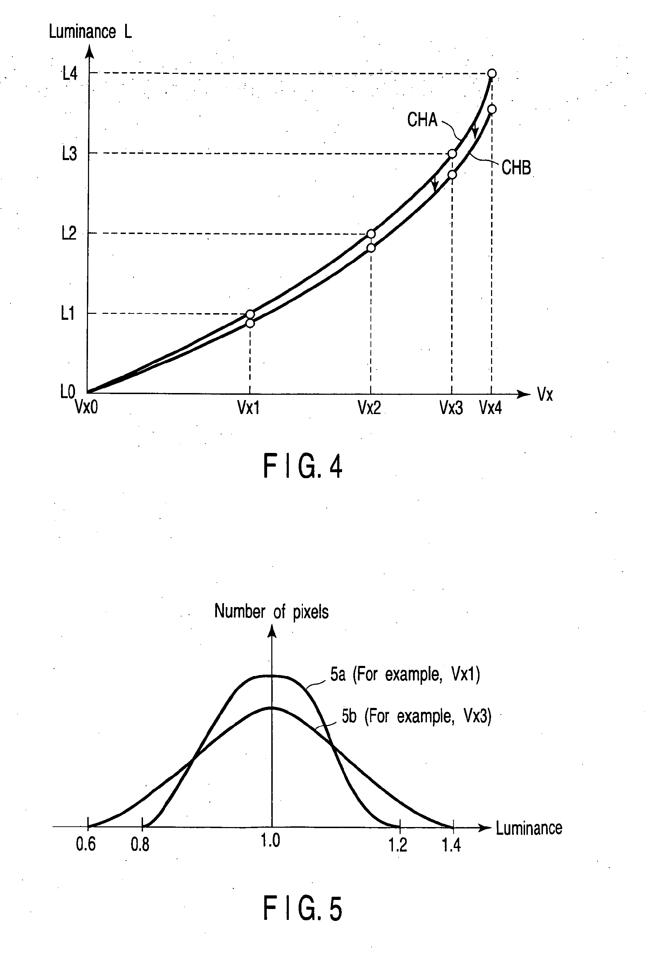

In this case, Vx1 to Vx4 which set the maximum luminance into four divided values as shown in FIG. 4 are set as the variable voltage Vx of FIG. 2D. That is, Vx1 to Vx4 are set so that the relation of L2 = 2L1, L3 = 3L1, L4 = 4L1 can be attained. Then, as shown in FIG. 3A to FIG. 3D, for example, if setting of basic D.C. voltage of four stages of Vx1 to Vx4 is made, the luminance L1 at the time of Vx1, the luminance L2 at the time of Vx2, the luminance L3 at the time of Vx3, the luminance L4 at the time of Vx4 as shown in FIG. 4 can be attained.

In the signal line driver 121, a 10-bit input signal is utilized. Among them, two bits (for example, 00, 01, 10, 11) are used to simultaneously acquire the basic D.C. voltages Vx0, Vx1, Vx2, Vx3. Then, the remaining eight bits (values 1 to 256) are used to make the pulse width variable.

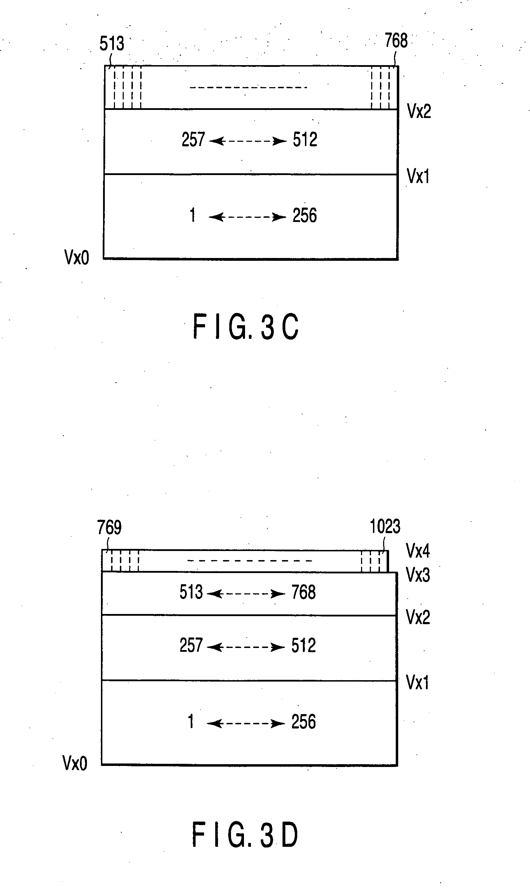

As shown in FIG. 3A to FIG. 3D, for example, basic D.C. voltages Vx0, Vx1, Vx2, Vx3 used as four types of references as shown in FIGS. 3A, 3B, 3C, 3D can be acquired by use of upper two bits. Next, a variation in the pulse width can be attained by the voltage of Vx1 as shown in FIG. 3A when an input varies in a range of 1 to 256 by making 8-bit data variable. Further, when an input varies in a range of 257 to 512 as shown in FIG. 3B, a variation in the pulse width can be attained by the voltage of Vx2 in addition to Vx1. Further, when an input varies in a range of 513 to 768 as shown in FIG. 3C, a variation in the pulse width can be attained by the voltage of Vx3 in addition to Vx2. Further, when an input varies in a range of 768 to 1023 as shown in FIG. 3D, a variation in the pulse width can be attained by the voltage of Vx4 in addition to Vx3.

When the voltage of the signal line is variably changed, a display dot A can acquire the luminance L0 at the time of Vx0, luminance L1 at the time of Vx1, luminance L2 at the time of Vx2, luminance L3 at the time of Vx3, luminance L4 at the time of Vx4 as shown in a characteristic line CHA of FIG. 4, for example.

In FIG. 4, the characteristic line CHA of the display dot A having a different luminance characteristic and a characteristic line CHB of a display dot B are shown. A difference in the characteristic becomes a factor which causes luminance irregularity. A luminance irregularity reducing process will be described later in detail.

In the above luminance characteristic, the voltages of Vx1 to Vx4 are set to attain the relation of L2 = 2L1, L3 = 3L1, L4 = 4L1. However, setting of Vx1 to Vx4 is not limited to this case and, for example, setting of Vx2 = 2Vx1, Vx3 = 3Vx1, Vx4 = 4Vx1 or the like can be made. Further, in the above description, a case wherein a variation in the pulse width modulation voltage is set in 256 stages in order to attain Vx1 to Vx4 by setting a signal used in the signal line driver 121 to ten bits is explained, but it may not be limited to this case.

The luminance characteristic correction circuit 112 is shown outside the flat panel display portion 104, but it can be incorporated in the flat panel display portion 104.

The scanning line driver 123 sequentially scans the lines starting from the top line in synchronism with a horizontal sync signal by a negative voltage (refer to FIG. 2C).

A plurality of light emitting elements are arranged in a matrix form in the respective intersections between the signal lines from the signal line driver 121 and the scanning lines from the scanning line driver 123 and light is emitted by applying a driving voltage of Vf = (Vy + Vx) to the light emitting element.

However, the luminance characteristic shown in FIG. 2D is slightly different for each display dot. Therefore, the luminance values L1 to L4 corresponding to the respective voltages Vx1 to Vx4 are different for each display dot. For example, the luminance characteristics of the display dot A having the characteristic line CHA and the display dot B having the characteristic line CHB of FIG. 4 are different from each other.

Therefore, luminance irregularity occurs. Further, since a variation in the luminance L1 to L4 is not uniform for each display dot (pixel), correction which will be described later becomes necessary.

FIG. 5 shows an example of the distribution of a plurality of display dots on the luminance when the voltage Vx1, the voltage Vx4 are applied to the plurality of display dots. The distribution characteristics are different depending on voltages of Vx1 to Vx4. That is, the display dot which is 1.0 at' Vx1 is not necessarily set to 1.0 at Vx2 to Vx4. For example, even when the normalized precision distribution is a characteristic of 5a at the voltage Vx1, it may be set to a characteristic of 5b at the voltage Vx3 in some cases. Therefore, a variation in the luminance occurs between a plurality of display dots and it is necessary to reduce the variation.

Further, when attention is paid to one display dot, variation rates (inclinations) of the luminance with respect to inputs in the respective regions of 1 to 256 (first luminance region), 257 to 516 (second luminance region), 517 to 768 (third luminance region) and 769 to 1023 (fourth luminance region) in which the inputs of the signal line driver 121 (= outputs of the luminance characteristic correction circuit) lie are different.

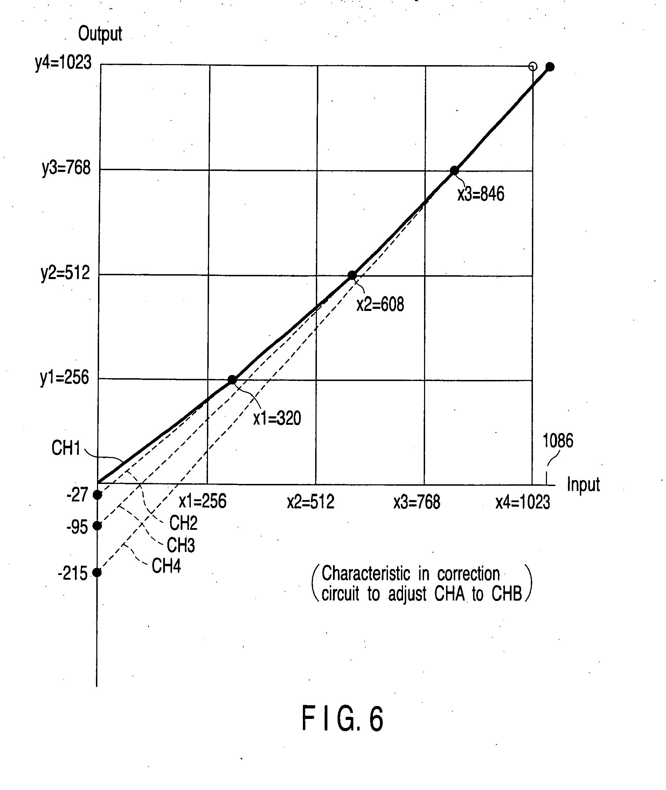

By taking the above case into consideration, in this invention, a plurality of video image level regions (first video image level region to fourth video image level region) in which the level of video image data supplied to the display dot is divided are set for a plurality of luminance regions obtained by dividing the luminance of the display dot. Further, the presence of characteristic lines CH1 to CH4 (the characteristic lines will be explained with reference to FIG. 6) having variation rates (inclinations) at which the luminance varies is recognized as video data varies in the respective regions. In other words, a plurality of luminance correction points are set and the inclinations of the correction characteristic lines of video data which pass through the respective correction points are corrected.

That is, in order to correct a variation in the luminance between the display dots, correction data for video data supplied to the display dots is derived. For example, the correction data is derived by measuring the luminance (candela) of each display dot and deriving information of a variation between the display dots. Then, the correction data is formed to adjust a display dot with relatively high luminance to a reference display dot with low luminance. For this purpose, in the correction circuit, correction is made not to set the input-output relation to one (input)-to-one (output) correspondence but to set the input-to-output to one-to-$(1+\alpha)$. Alternatively, it is necessary to make correction to set the input-output relation to one (input)-to-$(1-\alpha)$.

Further, it is necessary to consider a luminance variation rate in a plurality of regions in a range in which the luminance varies. For example, assume that the luminance L1 (= 1.00), luminance L2 (= 0.95), luminance L3 (= 0.90) and luminance L4 (= 0.85) are set for a display dot A. In this case, "1" means the average luminance of all of the display dots, for example. Then, assume that the luminance values L1 to L4 of a plurality of points of the luminance characteristic of a display dot B having lower luminance to which the luminance of the display dot A is adjusted are respectively set to 0.80. Then, it is necessary to correct input data of the video data level for the display dot along the characteristic of FIG. 6 in the correction circuit 112. That is, correction is made to adjust the luminance variation characteristic of a display dot with higher luminance to the luminance variation characteristic of a display dot with lower luminance.

FIG. 6 shows an input/output characteristic of a luminance characteristic correction circuit for the display dot A which is performed in the luminance characteristic correction circuit 112. The ordinate indicates values of output data and the abscissa indicates values of input data. As the output data, y1 = 256, y2 = 512, y3 = 768 and y4 = 1023 are set at equal intervals. In relation to this, values of the input data items x1, x2, x3 and x4 are set as follows by taking the adjustment process into consideration.

```
x1 = 256(y1) × 1.00(L1)/0.80 = 320
```

```
x2 = 512(y2) × 0.95(L2)/0.80 = 608
```

$$x3 = 768(y3) \times 0.90(L3)/0.80 = 864$$

$$x4 = 1023(y4) \times 0.85(L4)/0.80 = 1086$$

The reason why 0.80 is used is that the luminance values L1 to L4 of a plurality of points of the luminance variation characteristic of the display dot to be adjusted are respectively set to 0.80. In this example, the luminance values L1, L2, L3, L4 of a plurality of points of the luminance variation characteristic of the display dot B to be adjusted are all set to a coefficient 0.8. This is to simplify the explanation and the luminance values L1, L2, L3, L4 of a plurality of points are different depending on the measurement result in some cases. Therefore, the coefficient may be determined according to the luminance characteristic.

Values of x1 to x4 (indicating input data) and corresponding values of y1 to y4 (indicating output data) plotted are the contents shown in FIG. 6. In this case, correction data between the respective plots is considered. The characteristic line of correction data has inclinations between the respective plots (in the respective regions) and has intercepts.

Examples of the derived inclinations and intercepts are shown below.

The inclinations of the characteristic lines CH1 to CH4 in the second luminance region, second luminance region, third luminance region, fourth luminance region are derived and multiplied by 1023 to derive correction data items 1(H1) to 4(H4) as follows.

Correction data 1(H1)

$$= 1023 \times (256(y1)-0)/(320(x1)-0) = 818$$

Correction data 2(H2)

$$= 1023 \times (512(y2)-256(y1))/(608(x2)-320(x1)) = 909$$

Correction data 3(H3)

$$= 1023 \times (768(y3)-512(y2))/(864(x3)- 608(x2)) = 1023$$

Correction data 4(H4)

$$= 1023 \times (1023(y4)-768(y3))/(1023(x4)- 864(x3)) = 1170$$

The reason why 1023 is multiplied in the above equations is that correction data of a display dot (to-be-adjusted display dot) having the inclination of 1 is set to 1023 (maximum value in the 10-bit representation). However, the correction data items 2(H1) to 4(H4) depend on the luminance characteristics of display dots. There is a display dot having an inclination larger than 1, as shown by CH4 in FIG. 6. Therefore, correction data is represented by 11 bits.

Further, it is necessary for the characteristic lines CH1 to CH4 having the above inclinations to have intercepts. The intercepts (intersections with the y axis in FIG. 6) are derived as follows.

$$\text{Correction data 2(H2)}' = 512(y2) - 907(H2) \times$$

$$608(x2)/1024 = -27$$

$$\text{Correction data 3(H3)}' = 768(y3) - 1022(H3) \times$$

$$864(x3)/1024 = -95$$

$$\text{Correction data 4(H4)}' = 1023(y4) - 1165(H4) \times$$

$$1086(x4)/1024 = -219$$

As described above, video data supplied to the display dot A can be corrected and a variation between the display dot A and display dot B can be reduced by use of the correction data items 1(H1) to 4(H4) for multiplication and correction data items 2(H2)' to 4(H4)' for addition. Likewise, a luminance variation between the other display dots can be reduced.

In the above example, as shown in FIG. 4, an example in which correction is made to adjust the luminance characteristic of the display dot A with high luminance to the luminance characteristic of the display dot B with low luminance is shown. However, conversely, correction may be made to adjust the characteristic of a display dot with low luminance to the characteristic of a display dot with high luminance.

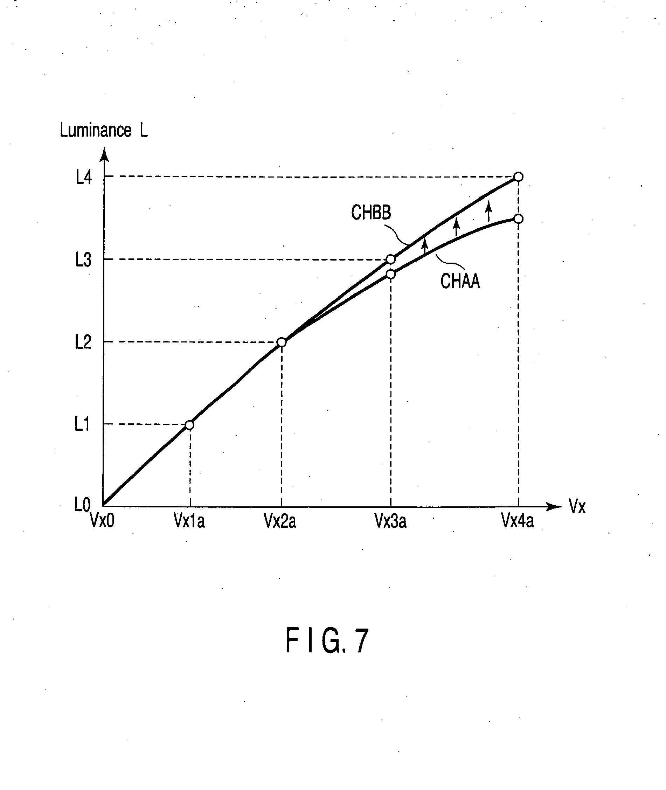

FIG. 7 shows a characteristic line CHAA of a display dot AA and a characteristic line CHBB of a display dot BB having different luminance characteristics. In this case, assume that the characteristic line CHBB has higher luminance than the characteristic line of the other display dot and the maximum luminance is approximately set so as not to exceed L4. In such a case, it is preferable to correct the characteristic line CHAA to set the characteristic line CHAA of the other display dot with low luminance closer to the characteristic line CHBB. This is because the luminance of the entire portion of the screen is corrected to be higher.

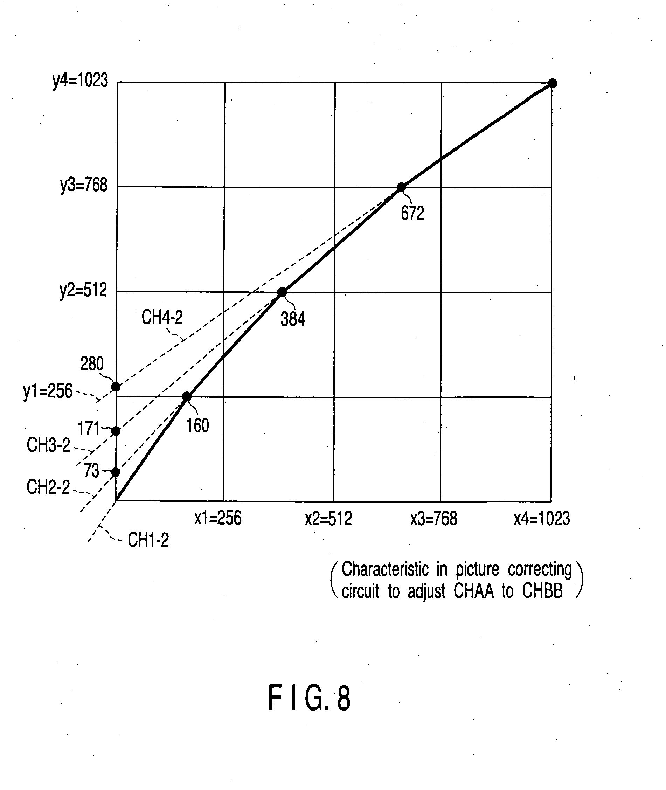

Assume that the following measurement result is obtained when the luminance values of a plurality of points in a luminance variation range are measured for the display dot AA, for example. Assume that the luminance L1 (= 0.5), the luminance L2 (= 0.6), the luminance L3 (= 0.7), the luminance L4 (= 0.8) are attained. Further, assume that the luminance values L1 to L4 of a plurality of points in the luminance characteristic of the display dot BB with high luminance to which the luminance of the display dot AA is adjusted are all set to 0.80. Then, input data of the video data level for the display dot must be corrected along the characteristic of FIG. 8 in the correction circuit 112. That is, correction is made to adjust the luminance variation characteristic BB of the display dot with low luminance to the luminance variation characteristic of the display dot AA with high luminance. In order to obtain 256, 512, 768, 1023 as the output y, the inputs x1, x2, x3, x4 are set as follows.

$$x1 = 256(y1) \times 0.5(L1)/0.80 = 160$$

$$x2 = 512(y2) \times 0.6(L2)/0.80 = 384$$

$$x3 = 768(y3) \times 0.7(L3)/0.80 = 672$$

$$x4 = 1023(y4) \times 0.8(L4)/0.80 = 1023$$

Values of the input data items x1 to x4 and corresponding values of the output data items y1 to y4 plotted are the contents of FIG. 8. In this case, correction data between the respective plots is considered. The characteristic line of correction data has inclinations between the respective plots (in the respective regions) and has intercepts.

Examples of the derived inclinations and intercepts are shown below.

The inclinations of the characteristic lines CH1-2 to CH4-2 in the first luminance region, second luminance region, third luminance region, fourth luminance region are derived and multiplied by 1023 to derive correction data items 1(H1) to 4(H4) as follows.

$$\text{Correction data } 1(H1)$$
$$= 1023 \times (256(y1)-0)/(160(x1)-0) = 1636$$

$$\text{Correction data } 2(H2)$$
$$= 1023 \times (512(y2)-256(y1))/(384(x2)-160(x1)) = 1169$$

$$\text{Correction data } 3(H3)$$
$$= 1023 \times (768(y3)-512(y2))/(672(x3)-384(x2)) = 909$$

$$\text{Correction data } 4(H4)$$
$$= 1023 \times (1023(y4)-768(y3))/(1023(x4)-672(x3)) = 743$$

The reason why 1023 is multiplied in the above equations is that correction data of a display dot (to-be-adjusted display dot) having the inclination of 1 is set to 1023 (maximum value in the 10-bit representation). However, the correction data items 2(H1) to 4(H4) depend on the luminance characteristics of display dots. There is a display dot having an inclination larger than 1 as shown by CH4 in FIG. 6. Therefore, correction data is represented by 11 bits.

Further, it is necessary for the characteristic lines CH1-2 to CH4-2 having the above inclinations to have intercepts. The intercepts (intersections with the y axis in FIG. 8) are derived as follows.

$$\text{Correction data } 2(H2)' = 512(y2) - 1022(H2) \times 384(x2)/1024 = 73$$

$$\text{Correction data } 3(H3)' = 768(y3) - 909(H3) \times 672(x3)/1024 = 171$$

$$\text{Correction data 4(H4)}' = 1023(y4) - 743(H4) \times$$

$$1023(x4)/1024 = 280$$

As described above, according to the present embodiment, correction data for a plurality of luminance correction points with respect to an image is prepared. The correction data contains multiplication and addition data items for video data. The data for multiplication is data which determines the inclination characteristic described above and the data for addition is data which determines the intercepts described above. Therefore, the video data is multiplied by correction data for multiplication and then the data for addition is added to video data obtained as the result of multiplication. Then, the video data obtained by the addition process is supplied to the display dot of the display.

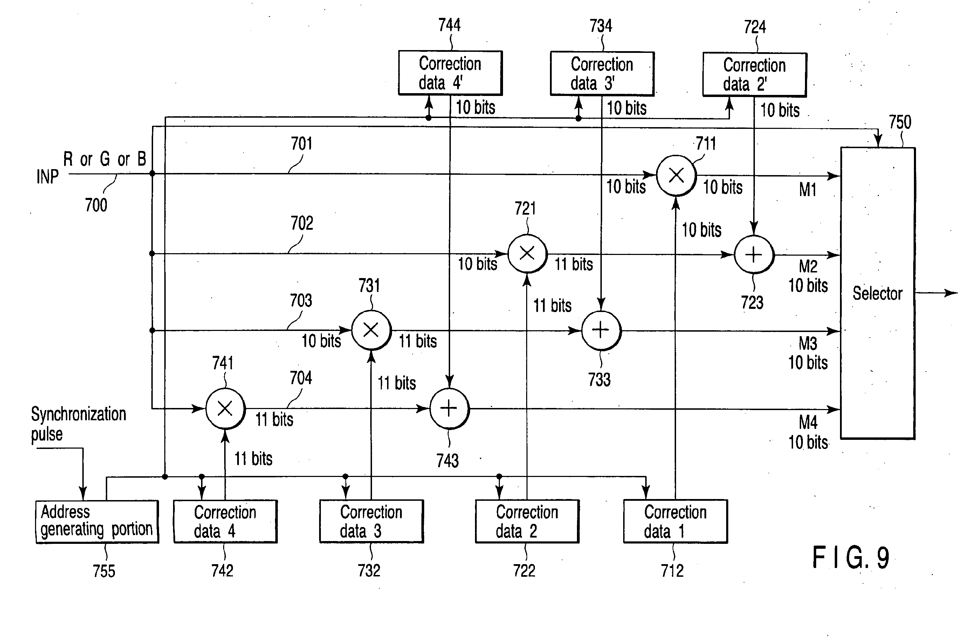

FIG. 9 shows one system of R, G or B video data in the luminance characteristic correction circuit 112. A correcting portion (path) 701, correcting portion (path) 702, correcting portion (path) 703, correcting portion (path) 701 respectively perform operations for the characteristic line CH1, characteristic line CH2, characteristic line CH3, characteristic line CH4 explained in FIG. 6, for example. In a multiplier 711, ten bits of input data are multiplied by ten bits of correction data 1 and the upper ten bits of the output data of 20 bits thus obtained are output. Further, in multipliers 721, 731, 741, ten bits of input data are multiplied by eleven bits of correction data 2, correction data 3, correction data 4 and the upper eleven bits of the respective output data items of 21 bits thus obtained are output. In this case, the intercept of the characteristic line CH1 is 0 and the inclination thereof is obtained as correction data 1(H1) = 818 as described before. Therefore, the input/output relation is obtained as follows.

$$\text{Output data Y = inclination} \times \text{input data X} +$$

$$\text{intercept}$$

In the case of the display dot A, the following operations are respectively performed.

In the correcting portion 701,

$$M1 = 818 \times X/1024 + 0$$

In the correcting portion 702,

$$Y = 907 \times X/1024 + (-27)$$

In the correcting portion 703,

$$Y = 1022 \times X/1024 + (-95)$$

In the correcting portion 704,

$$Y = 1165 \times X/1024 + (-215)$$

The reason why division by 1024 is performed in the above equations is to discard the lower ten bits of each of the outputs of the multipliers 711, 721, 731, 741.

In the correcting portion 701, the input data is multiplied by correction data 1 for multiplication from a correction data memory 712 in the multiplier 711. In the correcting portion 702, the input data is multiplied by correction data 2 for multiplication from a correction data memory 722 in the multiplier 721 and the result thereof is supplied to an adder 723. In the adder 723, the result of multiplication is added together with intercept data from a correction data memory 724, that is, correction data (-27) for addition.

In the correcting portion 703, the input data is multiplied by correction data 3 for multiplication from a correction data memory 732 in the multiplier 731 and the result thereof is supplied to an adder 733. In the adder 733, the result of multiplication is added together with correction data (-95) for addition from a correction data memory 734.

In the correcting portion 704, the input data is multiplied by correction data 4 from a correction data memory 742 in the multiplier 741 and the result thereof is supplied to an adder 743. In the adder 743, the result of multiplication is added together with correction data (-215) for addition from a correction data memory 744.

An output M1 of the multiplier 711, an output M2 of the adder 723, an output M3 of the adder 733, an output M4 of the adder 743 are input to a selector 750 as selecting means.

The selector 750 selects and outputs data of values corresponding to the respective luminance regions. That is, when the input data value INP of an input portion 700 is set as INP $\leq$ 256, M1 is selected and output. At the time of 257 $\leq$ INP $\leq$ 516, M2 is selected and output. At the time of 517 $\leq$ INP $\leq$ 768, M3 is selected and output. At the time of 769 $\leq$ INP, M4 is selected and output. Output data (for example, video data of R) selected by the selector 750 is input to the signal line driver 121 shown in FIG. 1. The other video data of G or B is subjected to the same process and input to the signal line driver 121. Thus, the type of data to be used is determined according to input data in the selector 750.

Correction data items derived by the same calculations as described above are prepared for respective display dots and luminance correction is made for the entire portion of the screen. 755 indicates an address generating portion. The address generating portion 755 grasps the order and addresses of display dots to be driven. Therefore, read addresses are generated so that adequate correction data items corresponding to respective display dots on the screen will be read out from the correction data memories 712, 722, 732, 742, 724, 734, 744. The address generating portion 755 controls the overall operation of the correction circuit 112. The address generating circuit 755 may be part of a system control portion which controls the whole device.

As the reference display dot, different ones may be set for a first luminance region and second luminance region instead of using one. Thus, adequate luminance irregularity correction is attained in each luminance region. That is, in the above example, even if the luminance L1 of a display dot used as a reference is set at 0.8, the luminance values L2 to L4 are not necessarily set at 0.8. Therefore, in practice, correction may be made by using different display dots as the reference in the respective regions.

The correction data memories 712, 722, 732, 742 and correction data memories 724, 734, 744 are contained in correction data storage means such as an SDRAM. As the correction data storage means, a single memory or a plurality of memories can be used. Further, other information storage media can be used.

Further, the multipliers 711, 721, 731, 741 and adders 723, 733, 743 are contained in a luminance irregularity reducing processing portion which performs multiplying and adding operations. The selector 750 is selecting means for selecting and outputting video data after correction.

This invention is not limited to the above embodiment. In the above embodiment, the four luminance regions L1 to L4 are present, and first, second, third, fourth characteristic lines are set for the respective regions, and input video data items are corrected by use of correction data items for multiplication and addition to have the same inclinations as those of the characteristic lines. However, the number of luminance regions is not limited to four and the main feature of this invention can be achieved by setting the number of regions to at least two. The number of regions can be changed according to the degree of variation in luminance.

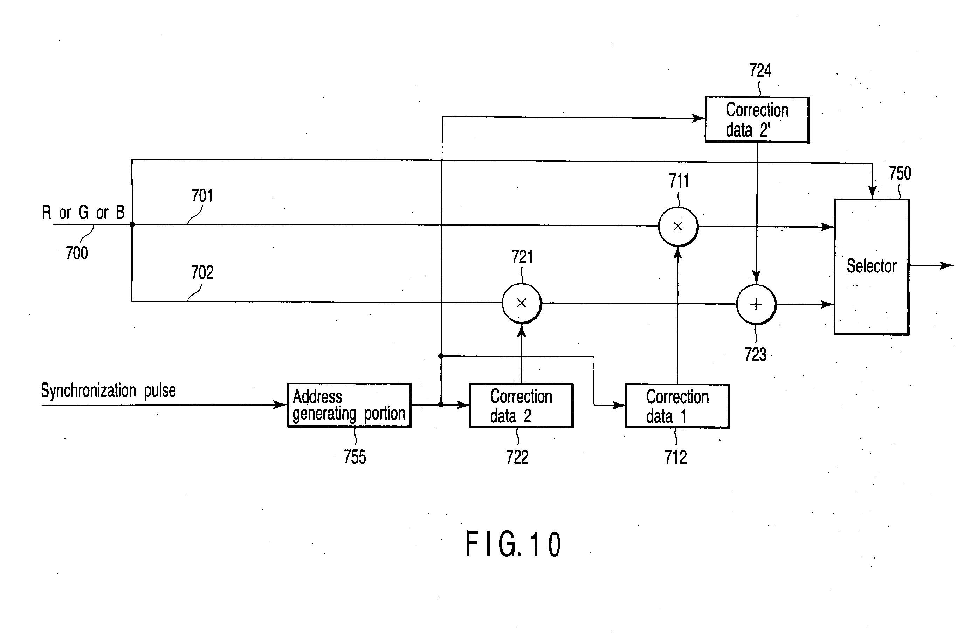

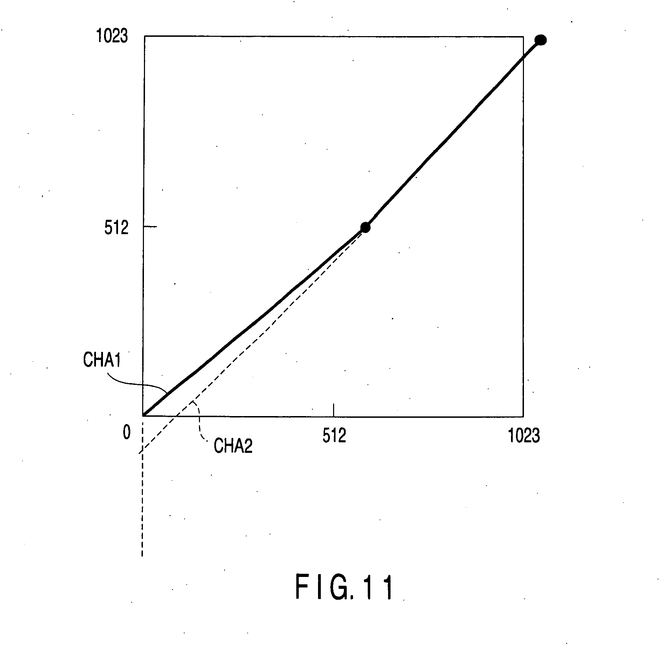

FIG. 10 shows another embodiment of this invention. That is, portions corresponding to those of the blocks in FIG. 9 are denoted by the same reference numerals used in FIG. 9. As shown in FIG. 11, the embodiment is an example in which the luminance region is equally divided into two and characteristic lines CHA1 and CHA2 corresponding to the respective regions are set. Correction data 1 from a correction data memory 712 is used in order to obtain the characteristic line CHA1 and correction data 2 from a correction data memory 722 and correction data 2' from a correction data memory 724 are used in order to obtain the characteristic line CHA2.

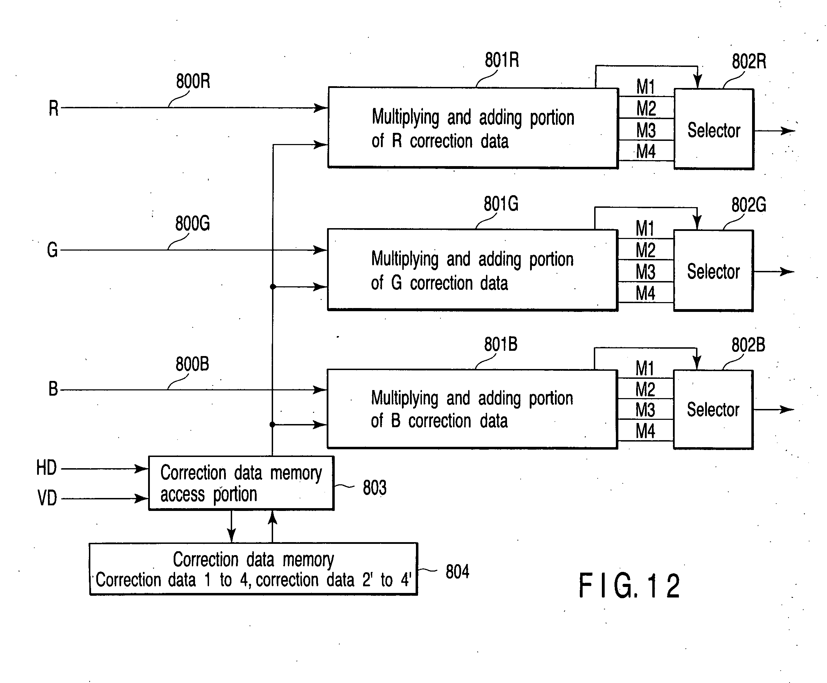

FIG. 12 shows a luminance characteristic correcting portion for R, G, B video data items. The R, G, B video data items are respectively input to a multiplying and adding portion 801R for R correction data, a multiplying and adding portion 801G for G correction data and a multiplying and adding portion 801B for B correction data via input portions 800R, 800G, 800B.

Each of the multiplying and adding portion 801R for R correction data, multiplying and adding portion 801G for G correction data and multiplying and adding portion 801B for B correction data is a circuit which includes the multiplier, correction data memory and adder as explained in FIG. 9. Output signals of the multiplying and adding portion 801R for R correction data, multiplying and adding portion 801G for G correction data and multiplying and adding portion 801B for B correction data are respectively input to selectors 802R, 802G, 802B. In the selectors 802R, 802G, 802B, adequate data items are selected and output as explained in FIG. 9.

803 indicates a correction data memory access portion (corresponding to the address generating portion of FIG. 9) and 804 indicates a correction data memory (corresponding to the correction data memories 712, 722, 732, 742, 724, 734, 744). As described before, the correction data memory 804 has correction data and outputs correction data corresponding to each display dot under control of the correction data memory access portion 803. Thus, correction data items are supplied to the multiplying and adding portion 801R for R correction data, multiplying and adding portion 801G for G correction data, multiplying and adding portion 801B for B correction data, selectors 802R, 802G, 802B.

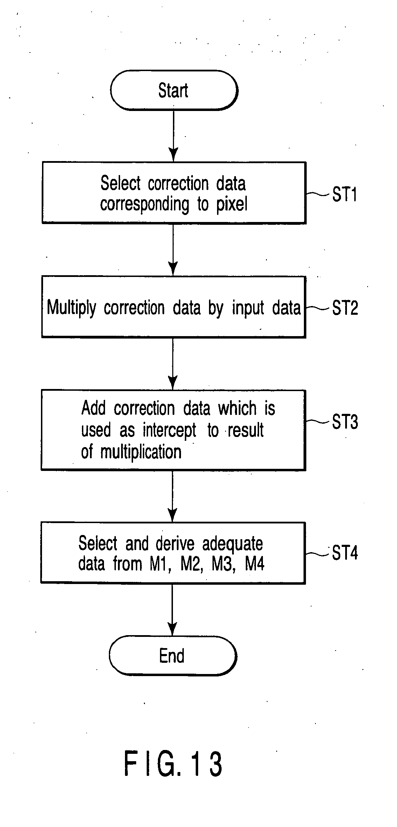

FIG. 13 is a flowchart for schematically illustrating the operation of the above device. Correction data corresponding to a display dot is selected from the correction data memory 804 (step ST1). Then, a process of multiplying the correction data by input data is performed (step ST2). Next, a process of adding correction data which is used as an intercept to the result of multiplication is performed (step ST3). After this, adequate data is selected from M1, M2, M3, M4 formed and output (step ST4). Therefore, the above multiplying and adding processes can also be realized by software. In the luminance region L1, the same as in FIG. 13 is applied if it is assumed that "0" is added in the adding process after the correction data multiplying process.

In the explanation of the above embodiment, it is explained as if correction data items for the entire display dots of one screen are prepared in the correction data memory. However, it is not limited to the above embodiment. In order to reduce the memory capacity, various embodiments can be made.

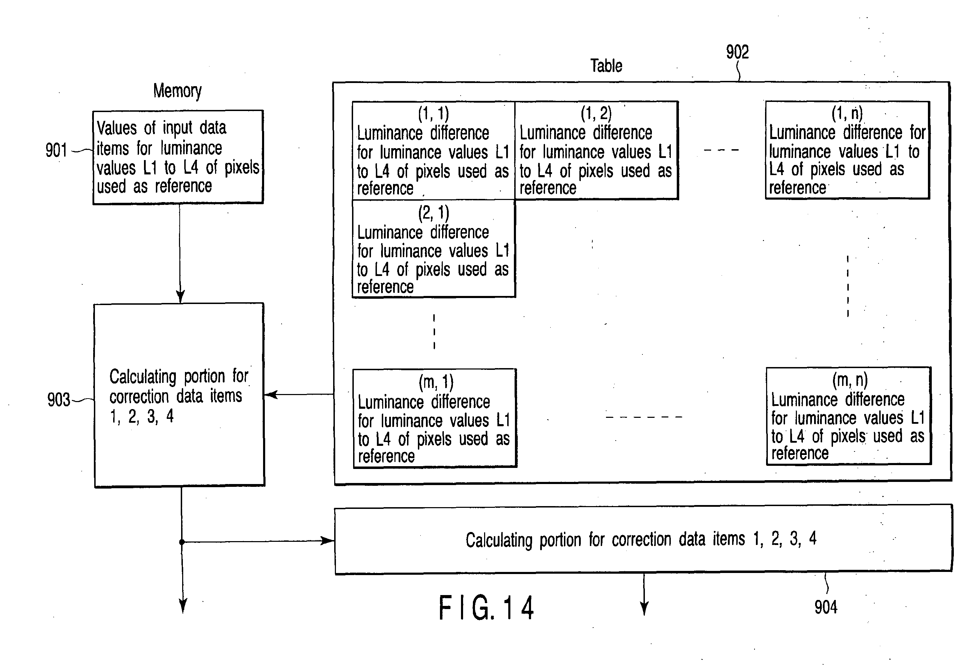

FIG. 14 shows one example of a method for obtaining correction data. For example, it is assumed that a display dot among the display dots which has low luminance is detected. Then, the detected display dot is used as a reference display dot and it becomes necessary to correct the luminance values of other display dots so as to attain the same luminance variation as the luminance variation of the above display dot. That is, it is necessary to perform the process of adjusting the luminance values of the other display dots to the luminance of the reference display dot.

In this case, values of input video data items corresponding to luminance values L1, L2, L3, L4 of the display dot used as a reference are stored in a memory 901. On the other hand, as correction information relating to the respective display dots (1, 1), ... (n,m), luminance difference information items for the luminance values L1, L2, L3, L4 of the reference display dot are stored in a table 902. Of course, it is luminance difference information obtained as the result of measurement of the luminance values of the other display dots in the same condition as that of the reference display dot. The luminance difference information is stored as a difference (difference video data) between video data corresponding to the reference display dot and video data corresponding to a display dot to be compared therewith. In this case, it is assumed that the luminance varies linearly according to a variation in the video data since luminance adjustment is performed according to the pulse width in respective regions of L1-L2, L2-L3, L3-L4. As a result, correction data for suppressing luminance irregularity between the display dots can be attained while the amount of data to be stored is being reduced. In this case, the table 902 is shown, but as a table, tables for R, G, B may be prepared.

By preparing the table 902 and memory 901, correction data items 1, 2, 3, 4 can be easily calculated in a calculating portion 903. Further, if the correction data items 1, 2, 3, 4 can be acquired, correction data items 2', 3', 4' can also be obtained in a calculating portion 904.

With the above configuration, if L1, L2, L3, L4 of the reference display dot are corrected, the whole portion can be easily corrected and changed. This is because, for example, the reference display dot may become a different display dot due to a change with time or temperature and the reference value of the reference display dot will be changed in some cases. Such a case can be easily coped with by correcting storage data of the memory 901 without correcting the entire data. The changing and correction can be manually performed or automatically corrected. In short, it is only necessary to provide means for externally correcting the contents of the memory 901.

Further, as a memory for storing correction data, a plurality of memories are shown, but a method for effectively utilizing one memory may be used. Further, correction data to be stored is not necessarily limited to the above case. For example, it is assumed that multiplication data of the first luminance region is H1 and multiplication data of the second luminance region is H2. In this case, preparatory data (difference data) of H21 = (H2-H1) is prepared instead of H2. Then, when the luminance characteristic correction is made, H2 can be represented by using H1 and H2 based on H2 = (H1+H21). Since H21 is difference data and the value thereof is small, the memory capacity used can be reduced.

Addition data can be generated as follows by using H1, H2 (or H21). It is assumed that input data is X and output data is Y.

$$Y = H1*X \qquad\qquad\qquad ---region\ 1$$

$$Y = H2\ (or\ H21+H1)*X+b \qquad\qquad ---region\ 2$$

Thus, the simultaneous equations can be attained and b can be calculated based on the coordinate of an intersection between the regions 1 and 2. As a result, this can contribute to the memory capacity reduction. This idea can be used in either case where the whole part of the luminance characteristic correcting portion is realized by a software process or where it is configured by hardware.

In the above explanation, difference data is used, but this is not limitative and various preparatory data items such as data obtained as the result of division or compression data can be used. Any data which can cause the memory capacity to be consequently reduced may be used.

Further, in the above embodiment, the display dot having low luminance is used as a reference and correction is made to adjust the luminance of another display dot having high luminance to the luminance of the reference display dot. However, in a case where a lowering in the luminance causes a more serious problem than a lowering in the luminance irregularity by the above correction, a display dot having high luminance to some extent may be used as a reference.

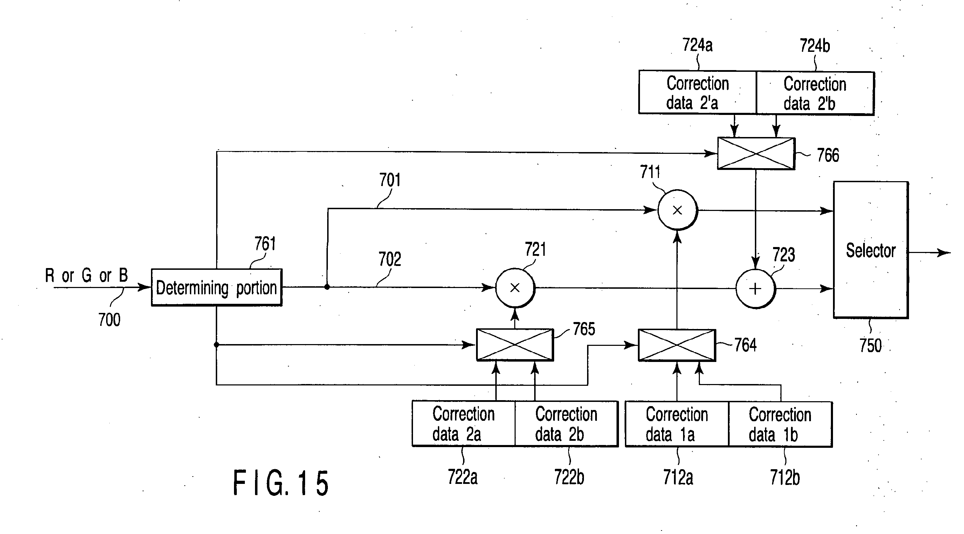

FIG. 15 shows a further embodiment. In the embodiment shown in FIG. 10, the selector 750 is provided in the final stage when output data is selected. However, this system is not limitative, and a determining portion 761 may be provided in the input stage and correction data for multiplication and correction data for addition/subtraction may be selected according to the level of input data by use of selectors 764, 765, 766. The other portions are the same as those of the example shown in FIG. 10, and therefore, a detail explanation is omitted.

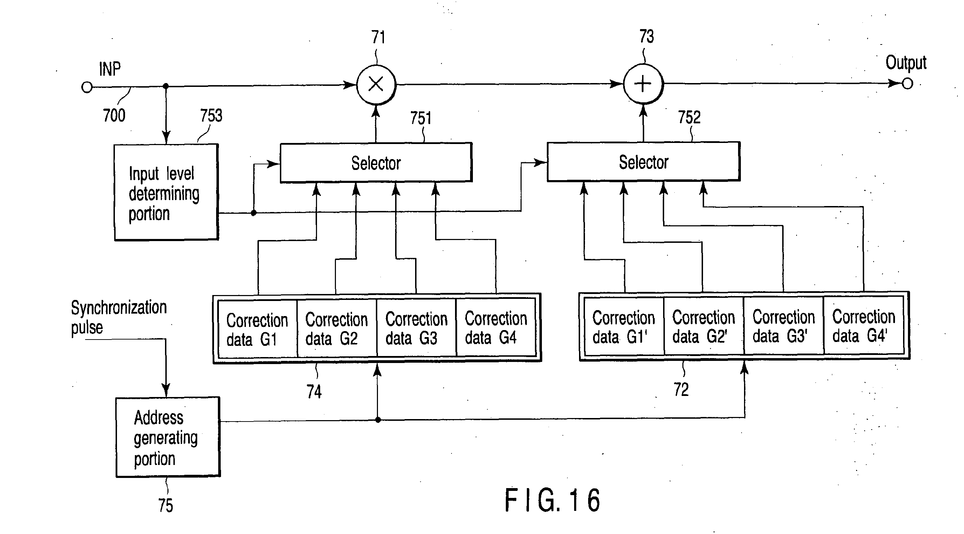

FIG. 16 shows another embodiment of this invention. An input portion 700 is connected to a multiplier 71 and connected to an input level determining portion 753. Correction data for multiplication selected by a selector 751 is input to the multiplier 71. Video data as the result of multiplication of the multiplier 71 is input to an adder 73. Correction data for addition selected by a selector 752 is input to the adder 73.

The selector 751 selects one group of correction data groups G1 to G4 stored in a memory 74 and outputs one data of the selected group. The selector 752 also selects one group of correction data groups G1' to G4' stored in a memory 72 and outputs one data of the selected group. One group selected is determined by an determination output of the input level determining portion 753. The input level determining portion 753 specifies a group selected according to a value of Vx shown in FIG. 6 and FIG. 8 to which the level of an input signal belongs. Output data of the group is determined by an address generating portion 75. Correction data is determined according to an address of a display dot on the screen and the address generating portion recognizes the address of the display dot. Therefore, correction data of an address specified by the address generating portion 75 corrects video data supplied to a corresponding display dot.

With the above configuration, the same luminance irregularity reducing process as that of the embodiment explained before can be attained.

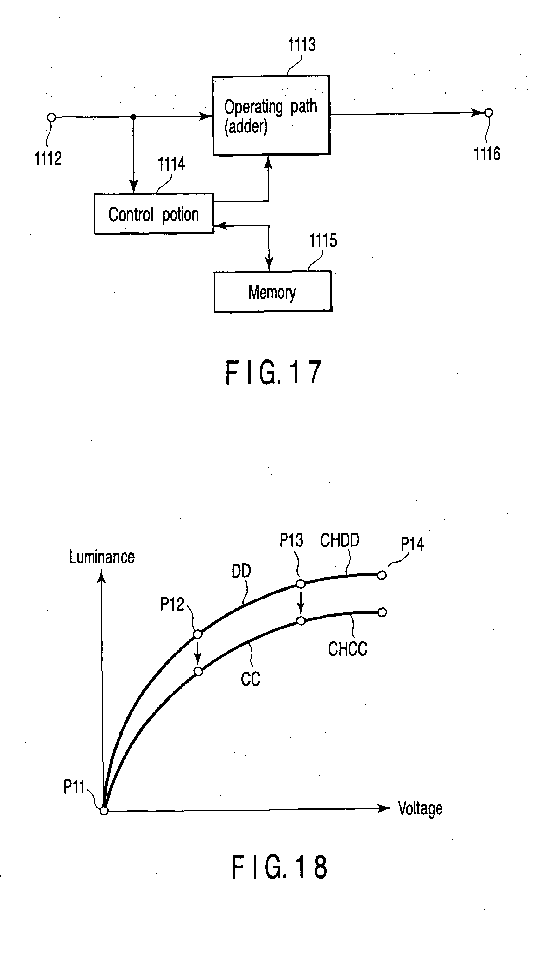

FIG. 17 is an embodiment showing the basic configuration which is the feature of this invention. Input video data is input to an input terminal 1112. The input video data is supplied to one operating path 1113 which includes an adder or subtracter. Further, the input video data is also input to a control portion 1114. A memory 1115 stores correction data used in the operating path 1113. In this case, as shown in FIG. 18, the memory 1115 sets a plurality of luminance correction points P11, P12, P13, P14 on the luminance characteristic of one display dot DD to be corrected and correction data items of the plurality of luminance correction points are stored in the memory 1115. It is assumed that the characteristic CHDD of the display dot DD is set closer to the characteristic CHCC of a display dot CC used as a reference.

When input video data corresponding to a plurality of luminance correction points P11, P12, P13, P14 for the display dot DD is input, the control portion 1114 reads out correction data stored in the memory 1115 and supplies it to the operating path 1113 for correction of the input video data. Further, when input video data between a plurality of luminance correction points is input, it uses correction data to form interpolation correction data and supplies the interpolation correction data to the operating path 1113 for correction of the input video data. The interpolation correction data items between the luminance correction points P11 and P12, between the luminance correction points P12 and P13, between the luminance correction points P13 and P14 may be derived by linear approximation or may be derived by approximation using a function. When the interpolation correction data is derived by approximation using a function, the function may be a function corresponding to the type of elements.

This invention is not limited to the above embodiments as it is and can be embodied by modifying the constituents without departing from the scope thereof at the embodying stage. Further, various inventions can be formed by adequately combining a plurality of constituents disclosed in the above embodiments. For example, some constituents may be omitted from the whole constituents disclosed in the above embodiments. In addition, the constituents disclosed over the different embodiments can be adequately combined.

Industrial Applicability

For example, this invention can be applied to a flat video display device using field emission type elements, surface field (Surface-conduction Electron-emitter) type elements, plasma light emission type elements or the like. It is effective when luminance irregularity for each display dot is corrected or when the luminance characteristic of the display dot is corrected.

**Claims**

1. A luminance characteristic correcting method of a display device which includes an operating path having an adder or subtracter to which input video data is input, a memory which is a memory storing correction data used in the operating path, stores correction data of a plurality of luminance correction points, the correction data sets the plurality of luminance correction points on a luminance characteristic of least one display dot, and a control portion which controls the operating path and the memory, comprising:

   supplying correction data stored in the memory to the operating path for correction of the input video data when the input video data of the plurality of luminance correction points for the display dot is input under control of the control portion,
   forming interpolation correction data by use of the correction data when input video data between the plurality of luminance correction points is input and supplying the interpolation correction data to the operating path for correction of the input video data.

2. The luminance characteristic correcting method of the display device according to claim 1, wherein the operating path includes a multiplier to which input video data is input and an adder to which output video data of the multiplier is input, the memory stores correction data to be supplied to the multiplier and adder, and the control portion controls the multiplier, adder and memory,
   correction data for a plurality of luminance correction points on a luminance characteristic of at least one display dot is prepared in the memory and the correction data contains correction data for multiplication and addition with respect to video data,
   correction data for multiplication is multiplied by the video data corresponding to the display dot in the multiplier of the operating path under control of the control portion,
   data for addition/subtraction is added or subtracted with respect to video data obtained as the result of multiplication in the adder, and
   video data obtained by the adding process is output to a corresponding display dot.

3. The luminance characteristic correcting method of the display device according to claim 2, wherein the correction data for multiplication and correction data for addition/subtraction are data to make correction to set a luminance characteristic of a corresponding display dot to a preset luminance characteristic of a reference display dot with low luminance when the input video data drives the above display dot.

4. The luminance characteristic correcting method of the display device according to claim 2, wherein the correction data for multiplication and correction data for addition/subtraction are data to make correction to set a luminance characteristic of a corresponding display dot to a preset luminance characteristic of a reference display dot with high luminance when the input video data drives the above display dot.

5. The luminance characteristic correcting method of the display device according to claim 2, wherein values of the correction data items for multiplication and addition are switched according to a region of a plurality of preset regions to which a value of the input video data belongs.

6. The luminance characteristic correcting method of the display device according to claim 2, wherein the correction data for addition/subtraction and correction data for multiplication are first correction data for a first display dot and second correction data for a second display dot is formed by calculations using luminance difference data indicating a luminance difference between the first display dot and the second display dot and the first correction data.

7. The luminance characteristic correcting method of the display device according to claim 2, wherein plural sets of the correction data for multiplication and correction data for addition/subtraction are prepared in correspondence to plural points (a plurality of luminance points) of values of the input video data,
   input video data is branched into a plurality of paths,
   the plural sets of the correction data for multiplication and correction data for addition/subtraction are used for multiplication and addition in the respective paths, and
   a selector outputs a calculation result of any one path according to a value of the input video data.

8. The luminance characteristic correcting method of the display device according to claim 2, wherein plural sets of the correction data for multiplication and correction data for addition/subtraction are prepared in correspondence to plural points (a plurality of luminance points) of values of the input video data,

input video data is branched into a plurality of paths,
the plural sets of the correction data for multiplication and correction data for addition/subtraction are used for multiplication and addition in the respective paths via a selector, and
the selector uses any one set of the correction data for multiplication and correction data for addition/subtraction according to a value of the input video data.

9. The luminance characteristic correcting method of the display device according to claim 2, wherein plural sets of the correction data for multiplication and correction data for addition/subtraction are prepared in correspondence to plural points (a plurality of luminance points) of values of the input video data,
input video data is guided into one path incorporated,
the plural sets of the correction data for multiplication and correction data for addition/subtraction are each used for multiplication and addition in the path via a selector, and
the selector uses any one set of the correction data for multiplication and correction data for addition/subtraction according to a.value of the input video data.

10. A luminance characteristic correcting apparatus of a display device comprising,
an operating path including an addition or subtracter to which input video data is input,
a memory which stores correction data of a plurality of luminance correction points which is correction data used in the operating path, the correction data sets the plurality of luminance correction points on a luminance characteristic of at least one display dot, and
a control portion which supplies correction data stored in the memory for correction of the input video data to the operating path when the input video data of the plurality of luminance correction points for the display dot is input, and forms interpolation correction data by using the correction data and supplies the interpolation correction data for correction of the input video data to the operating path when input video data between the plurality of luminance correction points is input.

11. The luminance characteristic correcting apparatus of the display device according to claim 10, wherein the operating path includes a multiplier to which input video data is input and an adder to which output video data of the multiplier is input,
the memory stores the correction data supplied to the multiplier and adder, and
the control portion multiplies correction data for multiplication with respect to the video data corresponding to the display dot in the multiplier, adds or subtracts correction data for addition/subtraction with respect to video data obtained as the result of multiplication in the adder and outputs video data obtained by the adding process to a corresponding display dot.

12. The luminance characteristic correcting apparatus of the display device according to claim 11, wherein the input video data is branched into a plurality of paths,
the multiplier and adder are provided in the respective paths, and
a final output of each path is selected by a selector contained in the control portion and output.

13. The luminance characteristic correcting apparatus of the display device according to claim 11, in which plural sets of the correction data for multiplication and correction data for addition/subtraction are prepared in correspondence to plural points (a plurality of luminance points) of values of the input video data, and
a plurality of paths into which the input video data is branched and guided are provided, and
the apparatus comprises a plurality of selectors which supply the plural sets of the correction data for multiplication and correction data for addition/subtraction to the multipliers and adders of the respective paths are provided, and
a determining portion which controls the selector to select any one set of the correction data for multiplication and correction data for addition/subtraction according to a value of the input video data.

14. The luminance characteristic correcting apparatus of the display device according to claim 11, in which plural sets of the correction data for multiplication and correction data for addition/subtraction are prepared in correspondence to plural points (a plurality of luminance points) of values of the input video data, and
one path into which the input video data is guided is provided, and
the apparatus comprises a selector which supplies the plural sets of the correction data for multiplication and correction data for addition/subtraction to the multiplier and adder of the path, and
a determining portion which controls the selector to select any one set of the correction data for multiplication and correction data for addition/subtraction according to a value of the input video data.

**15.** The luminance characteristic correcting apparatus of the display device according to claim 11, comprising a determining portion which switches values of the correction data items for multiplication and addition according to a region among a plurality of preset regions to which a value of the input video data belongs.

**16.** The luminance characteristic correcting apparatus of the display device according to claim 11, wherein the correction data for addition/subtraction and correction data for multiplication stored in the memory are first correction data for a first display dot, and

second correction data for a second display dot is formed by calculations using luminance difference data indicting a luminance difference between the first display dot and the second display dot and the first correction data in a calculating portion.

**17.** The luminance characteristic correcting apparatus of the display device according to claim 16, wherein the luminance difference data is previously stored in a table as data of a plurality of display dots.

**18.** A video display device comprising:

a multiplier to which input video data is input,
a first path including an adder to which output video data of the multiplier is input,
a memory storing correction data-which is correction data to be supplied to the multiplier and adder and correction data for a plurality of luminance correction points of at least one display dot and includes correction data for multiplication and addition with respect to video data,
a control portion which controls to multiply correction data for multiplication with respect to the video data corresponding to the display dot by the multiplier in the first path, add or subtract the data for addition/subtraction with respect to video data obtained as the result of multiplication in the adder, further add or subtract the data for addition/subtraction, and output video data obtained by the adding process to a corresponding display dot, and
a display portion which is supplied with video data subjected to the adding process.

**19.** The video display device according to claim 18, comprising a determining portion which switches values of the correction data items for multiplication and addition according to a region among a plurality of preset regions to which a value of the input video data belongs.

**20.** The video display device according to claim 18, wherein the input video data is branched into the respective paths, the multiplier and adder are provided in each path, and
a final output of each path is selected by a selector contained in the control portion and output.

**21.** The video display device according to claim 18, wherein plural sets of the correction data for multiplication and correction data for addition/subtraction are prepared in correspondence to plural points (a plurality of luminance points) of values of the input video data, and
a plurality of paths into which the input video data is branched and guided are provided, and
the apparatus comprises a plurality of selectors which supply the plural sets of the correction data for multiplication and correction data for addition/subtraction to the multipliers and adders of the respective paths, and
a determining portion which controls the selector to select any one set of the correction data for multiplication and correction data for addition/subtraction according to a value of the input video data.

**22.** The video display device according to claim 18, wherein plural sets of the correction data for multiplication and correction data for addition/subtraction are prepared in correspondence to plural points (a plurality of luminance points) of values of the input video data,
one path into which the input video data is guided is provided, and
the apparatus comprises a selector which supplies the plural sets of the correction data for multiplication and correction data for addition/subtraction to the multiplier and adder of the path, and
a determining portion which controls the selector to select any one set of the correction data for multiplication and correction data for addition/subtraction according to a value of the input video data.

F I G. 1

EP 1 758 075 A1

Pulse width  a

## FIG. 2A

Pulse width  256a

## FIG. 2B

Vy

Pulse  supplied  to  scanning  line

## FIG. 2C

Luminance L

(L)

0

Vy

Vx

V=Vy+Vx

Voltage  V

## FIG. 2D

**F I G. 2 E**

**F I G. 3 A**

**F I G. 3 B**

513                    768

Vx2

257 ⟵ - - - - - ⟶ 512

Vx1

1 ⟵ - - - - - ⟶ 256

Vx0

# FIG. 3 C

769                    1023

Vx4
Vx3

513 ⟵ - - - - - ⟶ 768

Vx2

257 ⟵ - - - - - ⟶ 512

Vx1

1 ⟵ - - - - - ⟶ 256

Vx0

# FIG. 3 D

Luminance L

FIG. 4

Number of pixels

FIG. 5

FIG. 6

FIG. 7

$$\left(\begin{array}{l}\text{Characteristic in picture correcting}\\\text{circuit to adjust CHAA to CHBB}\end{array}\right)$$

# FIG. 8

744
Correction
data 4'
10 bits

734
Correction
data 3'
10 bits

724
Correction
data 2'
10 bits

750

701

INP
R or G or B

700

711
×
10 bits    10 bits    M1

721
×
10 bits    11 bits

702

+
723
M2
10 bits

10 bits

731
×
10 bits    11 bits

703

+
733
11 bits

M3
10 bits

11 bits

741
×
11 bits

704

+
743

M4
10 bits

Synchronization
pulse

11 bits

Selector

Address
generating portion

Correction
data 4

Correction
data 3

Correction
data 2

Correction
data 1

755        742        732        722        712

EP 1 758 075 A1

F I G. 9

F I G. 10

FIG.11

FIG.12

EP 1 758 075 A1

Start

Select correction data
corresponding to pixel — ST1

Multiply correction data by input data — ST2

Add correction data which is
used as intercept to result
of multiplication — ST3

Select and derive adequate
data from M1, M2, M3, M4 — ST4

End

# FIG. 13

Memory

901 — Values of input data items for luminance values L1 to L4 of pixels used as reference

903 — Calculating portion for correction data items 1, 2, 3, 4

Table                                    902

| (1, 1)<br>Luminance difference for luminance values L1 to L4 of pixels used as reference | (1, 2)<br>Luminance difference for luminance values L1 to L4 of pixels used as reference | - - - | (1, n)<br>Luminance difference for luminance values L1 to L4 of pixels used as reference |
|---|---|---|---|
| (2, 1)<br>Luminance difference for luminance values L1 to L4 of pixels used as reference | | | |
| (m, 1)<br>Luminance difference for luminance values L1 to L4 of pixels used as reference | - - - - - - | | (m, n)<br>Luminance difference for luminance values L1 to L4 of pixels used as reference |

Calculating portion for correction data items 1, 2, 3, 4

F I G. 1 4                                    904

FIG. 15

F I G. 1 6

EP 1 758 075 A1

FIG. 17

FIG. 18

## INTERNATIONAL SEARCH REPORT

| | International application No. |
|---|---|
| | PCT/JP2005/011070 |

**A. CLASSIFICATION OF SUBJECT MATTER**
Int.Cl⁷ G09G3/22, 3/20, H04N5/66

According to International Patent Classification (IPC) or to both national classification and IPC

**B. FIELDS SEARCHED**

Minimum documentation searched (classification system followed by classification symbols)
Int.Cl⁷ G09G3/22, 3/20, H04N5/66

Documentation searched other than minimum documentation to the extent that such documents are included in the fields searched

| | | | |
|---|---|---|---|
| Jitsuyo Shinan Koho | 1922-1996 | Jitsuyo Shinan Toroku Koho | 1996-2005 |
| Kokai Jitsuyo Shinan Koho | 1971-2005 | Toroku Jitsuyo Shinan Koho | 1994-2005 |

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
|---|---|---|
| X | JP 2-184892 A (Matsushita Electric | 1,10,18 |
| Y | Industrial Co., Ltd.), | 2,3,5,6,9, |
| | 19 July, 1990 (19.07.90), | 11,14-17,19, |
| | Page 2, lower right column, line 4 to page 3, | 22 |
| A | upper left column, line 12; Figs. 1, 2 | 4,7,8,12, |
| | (Family: none) | 13,20,21 |
| | | |
| Y | JP 2003-255884 A (Canon Inc.), | 2,5,6,9,11, |
| | 10 September, 2003 (10.09.03), | 14-17,19,22 |
| | Par. Nos. [0187] to [0204], [0272] to [0273]; | |
| | Figs. 23, 24 | |
| | & US 2003/0122759 A1 & CN 001424707 A | |

☒ Further documents are listed in the continuation of Box C.  ☐ See patent family annex.

| | |
|---|---|
| * Special categories of cited documents: | "T" later document published after the international filing date or priority date and not in conflict with the application but cited to understand the principle or theory underlying the invention |
| "A" document defining the general state of the art which is not considered to be of particular relevance | |
| "E" earlier application or patent but published on or after the international filing date | "X" document of particular relevance; the claimed invention cannot be considered novel or cannot be considered to involve an inventive step when the document is taken alone |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | |
| "P" document published prior to the international filing date but later than the priority date claimed | "&" document member of the same patent family |

| Date of the actual completion of the international search | Date of mailing of the international search report |
|---|---|
| 29 June, 2005 (29.06.05) | 19 July, 2005 (19.07.05) |

| Name and mailing address of the ISA/ | Authorized officer |
|---|---|
| Japanese Patent Office | |
| Facsimile No. | Telephone No. |

Form PCT/ISA/210 (second sheet) (January 2004)

**EP 1 758 075 A1**

### INTERNATIONAL SEARCH REPORT

International application No.

PCT/JP2005/011070

C (Continuation). DOCUMENTS CONSIDERED TO BE RELEVANT

| Category* | Citation of document, with indication, where appropriate, of the relevant passages | Relevant to claim No. |
|---|---|---|
| Y | JP 2004-157309 A (Toshiba Corp.), 03 June, 2004 (03.06.04), Par. No. [0034] (Family: none) | 3 |
| A | JP 5-273939 A (Sharp Corp.), 22 October, 1993 (22.10.93), Full text; all drawings (Family: none) | 1-22 |
| A | JP 8-248920 A (Canon Inc.), 27 September, 1996 (27.09.96), Full text; all drawings & US 005734361 A1 & US 006580407 B1 & EP 000686993 A1 & AU 002054995 A & AU 002501099 A & CN 001125893 A & AT 000173356 A & CA 002151202 A & KR 000170470 B & CN 001441454 A & CA 002151202 A1 | 1-22 |
| A | JP 2003-248452 A (National Institute of Advanced Industrial Science and Technology (AIST)), 05 September, 2003 (05.09.03), Full text; all drawings (Family: none) | 1-22 |
| A | JP 2001-209352 A (NEC Corp.), 03 August, 2001 (03.08.01), Full text; all drawings & US 2002/0008482 A1 | 1-22 |
| A | JP 2002-313262 A (NEC Mitsubishi Denki Visual Systems Kabushiki Kaisha), 25 October, 2002 (25.10.02), Full text; all drawings (Family: none) | 1-22 |

Form PCT/ISA/210 (continuation of second sheet) (January 2004)

34

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2001075542 A